Europäisches Patentamt

European Patent Office

Office européen des brevets

(19)

(11) Veröffentlichungsnummer: **0 206 116 B1**

(12) **EUROPÄISCHE PATENTSCHRIFT**

(45) Veröffentlichungstag der Patentschrift:
30.08.89

(21) Anmeldenummer: 86107954.9

(22) Anmeldetag: 11.06.86

(51) Int. Cl.⁴: **A 47 J 19/02**

---

(54) **Handpresse für Zitrusfrüchte odgl.**

---

(30) Priorität: 19.06.85 DE 8517828 U

(43) Veröffentlichungstag der Anmeldung:
30.12.86 Patentblatt 86/52

(45) Bekanntmachung des Hinweises auf die Patenterteilung: 30.08.89 Patentblatt 89/35

(84) Benannte Vertragsstaaten:
AT BE CH DE FR GB IT LI LU NL SE

(56) Entgegenhaltungen:
DE–A– 2 949 836
DE–C–   60 702
FR–A–   965 086
GB–A–   472 305
US–A– 1 411 813
US–A– 2 348 304

(73) Patentinhaber: Gruber, Horst
Mozartstrasse 19
D-8029 Sauerlach (DE)

(72) Erfinder: Gruber, Horst
Mozartstrasse 19
D-8029 Sauerlach (DE)

(74) Vertreter: Drost, Peter Dipl.-Ing.
Günderodestrasse 14a
D-8000 München 82 (DE)

## Beschreibung

Die Erfindung betrifft eine Handpresse für Zitrusfrüchte odgl., bestehend aus zwei schalenförmigen Teilen, die um eine gemeinsame Achse glenkig schwenkbar zum Auspressen einer dazwischengelegten Fruchtscheibe ineinander eintauchen, bei der die Gelenkachse in einem Ansatz am unteren Teil angebracht ist, und der Ansatz mit einem Ausgußkanal versehen ist, der in einen Ringraum mündet, welcher zur Aufnahme von Saft und Schale dient, wenn die beiden Teile beim Auspressen ineinander eintauchen.

Eine derartige Presse ist aus der DE-OS 29 49 836 bekannt. Das Auspressen von Scheiben ist in der dort beschriebenen Handpresse meist nur schwer möglich, ohne sich in unerwünschter Weise die Finger mit Saft zu benetzen. Die erwähnte bekannte Presse besitzt ein annähernd halbkreisförmig ausgebildetes Ober- und Unterteil und setzt sich im Bereich der Gelenkachse in einem schmalen rechteckförmigen Ansatz fort, der sich an der die Halbkreisfläche begrenzenden Diametralen fortsetzt. Ober- und Unterteil sind bei diesen Pressen mit Griffen versehen, die ein Zusammendrücken erleichtern. Dadurch haben diese Pressen eine verhältnismäßig große Grundfläche und neigen wegen der schräg nach oben gerichteten Griffe zum Kippen.

Bei der Handpresse gemäß der Erfindung liegt die Aufgabe vor, Fruchtscheiben in gleicher Weise wie Fruchtsegmente auspressen zu können.

Die Handpresse gemäß der Erfindung läßt sich vorteilhaft derart gestalten, daß sie stapelbar ist und sich so im Restaurations betrieb leicht handhaben läßt.

Im übrigen läßt sich die Presse nach der Erfindung auch als Zuckerschale und/oder Ablage für den Teebeutel verwenden.

Die Handpresse gemäß der Erfindung zeichnet sich dadurch aus, daß die beiden schalenförmigen Teile sowie der Ringraum voll kreisförmig ausgeführt sind, daß der Ansatz (6) sich nasenförmig nach außen verjüngend ausgebildet ist, wobei der Ansatz aus dem äußeren Umfangskreis des unteren Teiles hervortritt und eine nach außen ansteigende Ausgußbohrung enthält, die so bemessen ist, daß Kerne zurückgehalten werden. Weitere Einzelheiten der Erfindung sind ferner den abhängigen Patentansprüchen zu entnehmen und in der nachfolgenden Beschreibung anhand der Zeichnungen von Ausführungsbeispielen näher erläutert.

Es zeigen Fig.1 bis 3 ein Ausführungsbeispiel und zwar :

Fig.1 eine Aufsicht,

Fig.2 eine geschnittene Seitenansicht einer Handpresse,

Fig.3 einen Stapel mehrerer übereinander gestellter Handpressen,

Fig.4 bis 8 ein anderes Ausführungsbeispiel im Schnitt.

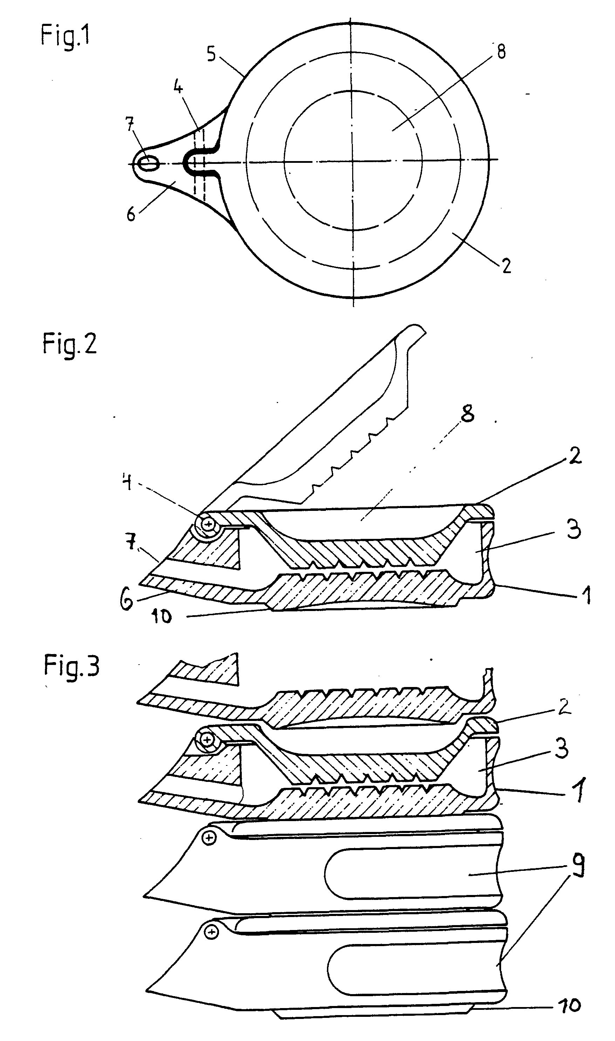

In den Fig. 1 bis 3 ist mit 1 das Unterteil und mit 2 das Oberteil einer Handpresse für Zitrusfrüchte odgl. bezeichnet, die ein erstes Ausführungsbeispiel der Erfindung darstellt. Das Oberteil 2 ist mit dem Unterteil 1 um die Achse 4 schwenkbar gelenkig verbunden. Zwischen Unterteil 1 und Oberteil 2 kann eine Fruchtscheibe eingelegt und ausgepreßt werden. Der Saft sammelt sich dann in dem Raum 3, der über die im Ansatz 6 vorgesehene Bohrung 7 entleert werden kann. Die Bohrung 7 wird zweckmäßig derart bemessen, daß Kerne zurückgehalten werden. Zweckmäßig ist die Achse 4 tangential zum Rand 5 außerhalb desselben angeordnet.

Das Unterteil 1 besitzt auf seiner Standfläche eine kreisförmige Erhebung 10, welche in die kreisformige Mulde 8 des Oberteils 2 paßt, so daß, wie in Fig. 3 dargestellt, mehrere erfindungsgemäße Handpressen übereinander gestapelt werden können. Zweckmäßig ist am Umfang des Unterteils 1, zumindest im von der Ausgußöffnung 7 abgewandten Teil eine Griffmulde 9 angebracht. Beim Servieren von Tee läßt sich beispielsweise die Mulde 8 im Oberteil 2 zur Ablage von Zuckerstücken verwenden. Die Mulde 8 kann später zur Ablage des gebrauchten Teebeutels verwendet werden.

Die Handpresse gemäß der Erfindung läßt sich aus möglichst säurefestem Metall oder auch z. B. verschiedenfarbigem Kunststoff ausführen. Oberteil 2 und Unterteil 1 können auch aus verschiedenen Materialien gefertigt sein.

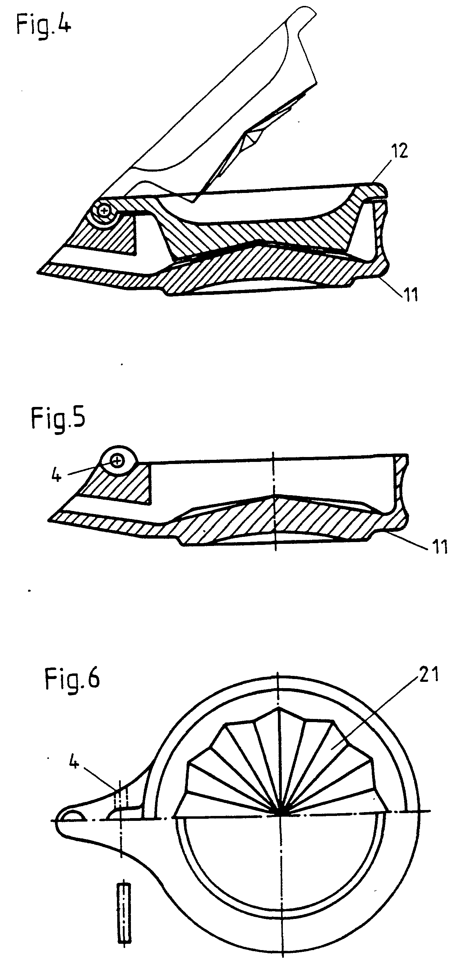

Fig. 4 zeigt ein anderes Ausführungsbeispiel einer Handpresse nach der Erfindung. Dieses besteht aus einem Oberteil 12 und einem Unterteil 11.

Wie aus Fig. 5 und 6 besonders deutlich erkennbar ist die obere Bodenfläche 21 des Unterteils 11 derart gestaltet, daß eine vom Mittelpunkt nach dem Rand zu abfallende Riffelung entsteht.

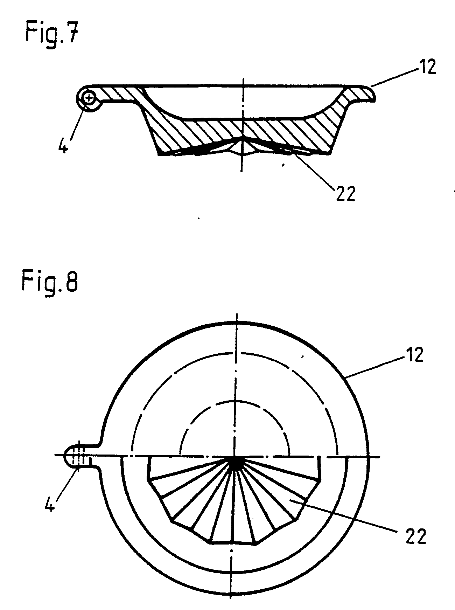

Das in Fig. 7 und 8 dargestellte Oberteil 12 besitzt einen Unterboden 22, der invers zur Fläche 21 gestaltet ist.

## Patentansprüche

1. Handpresse für Zitrusfrüchte o. dgl. bestehend aus zwei schalenförmigen Teilen (1, 2), die um eine gemeinsame Achse (4) gelenkig schwenkbar zum Auspressen einer dazwischengelegten Fruchtscheibe ineinander eintauchen, bei der die Gelenkachse (4) in einem Ansatz (6) am unteren Teil (1) angebracht ist, und der Ansatz (6) mit einem Ausgußkanal versehen ist, der in einen Ringraum (3) mündet, welcher zur Aufnahme von Saft und Schale dient, wenn die beiden Teile (1, 2) beim Auspressen ineinander eintauchen, dadurch gekennzeichnet, daß die beiden schalenförmigen Teile (1, 2) sowie der Ringraum (3) voll kreisförmig ausgeführt sind, daß der Ansatz (6) sich nasenförmig nach außen verjüngend ausgebildet ist, wobei der Ansatz aus dem äußeren Umfangskreis des unteren Teiles (1) hervortritt und eine nach außen ansteigende Ausgußbohrung (7) enthält, die so bemessen ist, daß Kerne zurückgehalten werden.

2. Handpresse nach Anspruch 1, dadurch gekennzeichnet, daß das Oberteil (2) und Unterteil (1) derart gestaltet sind, daß mehrere Pressen übereinander stapelbar sind.

3. Handpresse nach Anspruch 1 oder 2, dadurch gekennzeichnet, daß das Oberteil (2) auf seiner Deckseite eine Vertiefung (8) aufweist, welche zur Ablage von Zucker, Teebeutel odgl. nutzbar ist.

4. Handpresse nach einem der Ansprüche 1 bis 3, dadurch gekennzeichnet, daß der äußere Rand des Unterteiles (1) mit einer Griffmulde (9) versehen ist.

5. Handpresse nach einem der Ansprüche 1 bis 4, dadurch gekennzeichnet, daß das Unterteil (11) eine vom Mittelpunkt zum Rand zu abfallende Riffelung des Bodens (21) aufweist und der Unterboden (22) des Oberteiles (12) eine inverse Gestaltung zum Boden (21) besitzt.

## Claims

1. Hand squeezer for citrus fruit or the like, consisting of two dish-shaped parts (1, 2), which enter one into the other, pivotally articulated about a common axis (4), for the squeezing of a slice of fruit placed in between, with which the axis of articulation (4) is fitted in an extension (6) on the lower part (1), and the extension (6) is provided with a pouring channel, which opens into an annular space (3), which serves to receive juice and peel when the two parts (1, 2) enter one into the other during squeezing, characterized in that the two dish-shaped parts (1, 2) and the annular space (3) are fully circular in design, in that the extension (6) is designed to taper outwards in the form of a nose, the extension protruding from the outer circumferential circle of the lower part (1) and containing a pouring bore (7), which rises towards the outside and is dimensioned such that pips are kept back.

2. Hand squeezer according to Claim 1, characterized in that the upper part (2) and lower part (1) are shaped in such a way that several squeezers can be stacked one on top of the other.

3. Hand squeezer according to Claim 1 or 2, characterized in that the upper part (2) has on its top side a depression (8), which can be used for placing sugar, tea bags or the like.

4. Hand squeezer according to one of Claims 1 to 3, characterized in that the outer rim of the lower part (1) is provided with a gripping relief (9).

5. Hand squeezer according to one of Claims 1 to 4, characterized in that the lower part (11) has a fluting of the bottom (21), running down from the centre to the rim, and the base (22) of the upper part (12) has an inverse shape with respect to the bottom (21).

## Revendications

1. Presse manuelle pour des agrumes ou des fruits analogues, constituée de deux parties en forme de coquilles (1, 2) qui peuvent pénétrer l'une dans l'autre en étant articulées autour d'un axe commun (4), pour presser une tranche de fruit interposée entre elles, dans laquelle l'axe d'articulation (4) est ménagée dans un prolongement (6) de la partie inférieure (1) et le prolongement (6) est muni d'un canal d'écoulement, qui débouche dans une chambre annulaire (3), servant à recevoir le jus et la peau, quand les deux parties (1, 2) pénètrent l'une dans l'autre lors du pressage, caractérisée en ce que les deux parties en forme de coquilles (1, 2), ainsi que la chambre annulaire (3) sont de forme complètement circulaire, en ce que le prolongement (6) est en forme de bec se rétrécissant vers l'extérieur, le prolongement s'étendant au-delà du cercle périphérique extérieur de la partie inférieure (1) et comportant un perçage d'écoulement (7) ascendant vers l'extérieur et qui a des dimensions telles que les pépins sont retenus.

2. Presse manuelle suivant la revendication 1, caractérisée en ce que la partie supérieure (2) et la partie inférieure (1) sont conformées de manière à pouvoir empiler plusieurs presses les unes sur les autres.

3. Presse manuelle suivant la revendication 1 ou 2, caractérisée en ce que la partie supérieure (2) comporte sur son côté de couvercle une cavité (8) qui peut être utilisée pour déposer du sucre, un sachet de thé ou un produit analogue.

4. Presse manuelle suivant l'une des revendications 1 à 3, caractérisée en ce que le bord extérieur de la partie inférieure (1) est muni d'une cavité de préhension (9).

5. Presse manuelle suivant l'une des revendications 1 à 4, caractérisée en ce que la partie inférieure (1) comporte un striage du fond (21) descendant du centre vers le bord et le fond inférieur (22) de la partie supérieure (12) possède une conformation inverse de celle du fond (21).

Fig.1

Fig.2

Fig.3

Fig.4

12

11

Fig.5

4

11

Fig.6

21

4

Fig.7

Fig.8